# EUROPEAN PATENT APPLICATION

(11) **EP 4 838 639 A1**
(43) Date of publication of application: **11.11.2026**
(21) Application number: 26173271.3
(22) Date of filing: 20.04.2026
(51) Int. Cl.: H01M 50/103, H01M 50/51, H01M 50/119, H01M 50/516, H01M 50/522, H01M 50/545, H01M 50/553, H01M 50/562

(54) **BATTERY ASSEMBLY**

(30) Priority: 08.05.2025 KR 20250059986
(71) Applicant: SAMSUNG SDI CO., LTD., Yongin-si, Gyeonggi-do 17084 (KR)
(72) Inventor: LEE, Jeawoan, 17084 Yongin-si, Gyeonggi-do (KR); KIM, Won-Seok, 17084 Yongin-si, Gyeonggi-do (KR); EO, Soo-Mi, 17084 Yongin-Si, Gyeonggi-do (KR); KIM, Cheonsoo, 17084 Yongin-si, Gyeonggi-do (KR)
(74) Representative: Gulde & Partner

(57) **Abstract**

a first battery cell including: a first electrode assembly including a first electrode and a second electrode; a first case (112, 512, 612, 712, 812,912,10121112) accommodating the first electrode assembly therein, and electrically connected to the first electrode (342); and a first electrode terminal (114, 514, 614, 714, 814, 914, 1014, 1114) exposed outside of the first case (112, 512, 612, 712, 812, 912, 1012, 1112), and electrically connected to the second electrode (344); and a second battery cell including: a second electrode assembly including a third electrode and a fourth electrode; a second case (122, 522, 622, 722, 822, 922, 1022, 1122) accommodating the second electrode assembly therein, and electrically connected to the third electrode (344); and a second electrode terminal (124, 524, 624, 724, 824, 924, 1024, 1124) exposed outside of the second case (122, 522, 622, 722, 822, 922, 1022, 1122), and electrically connected to the fourth electrode (342). The first electrode (342) and the fourth electrode (342) have a same polarity as each other, the second electrode (344) and the third electrode (344) have a same polarity as each other, and the first case (112, 512, 612, 712, 812, 912, 1012, 1112) and the second case (122, 522, 622, 722, 822, 922, 1022, 1122) are coupled to each other in at least one contact region (130, 530, 630, 730, 830, 930, 1130).

## Description

### BACKGROUND

### 1. Field

Aspects of embodiments of the present disclosure relate to a battery assembly.

### 2. Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A battery assembly is a structure in which a plurality of secondary batteries, that is, a plurality of battery cells, are electrically connected to each other. Research on methods for connecting the plurality of battery cells in series or in parallel is being actively conducted. For example, in order to use a battery assembly in a small electronic device, such as a smartphone, it may be desirable to provide a high voltage while reducing the volume of the battery assembly to minimize or reduce a decrease in a battery capacity and improve an energy density per volume and/or per weight.

The above information disclosed in this Background section is for enhancement of understanding of the background of the present disclosure, and therefore, it may contain information that does not constitute related (or prior) art.

### SUMMARY

Embodiments of the present disclosure may be directed to a battery assembly based on the above.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to one or more embodiments of the present disclosure, a battery assembly includes: a first battery cell including: a first electrode assembly including a first electrode and a second electrode; a first case accommodating the first electrode assembly therein, and electrically connected to the first electrode; and a first electrode terminal exposed outside of the first case, and electrically connected to the second electrode; and a second battery cell including: a second electrode assembly including a third electrode and a fourth electrode; a second case accommodating the second electrode assembly therein, and electrically connected to the third electrode; and a second electrode terminal exposed outside of the second case, and electrically connected to the fourth electrode. The first electrode and the fourth electrode have a same polarity as each other, the second electrode and the third electrode have a same polarity as each other, and the first case and the second case are coupled to each other in at least one contact region.

The battery assembly achieves a series connection by directly coupling the cases of two battery cells, which themselves function as electrical terminals of opposite polarity. This design provides several technical effects and advantages. Primarily, it eliminates the need for additional or separate connection members, such as wires or busbars. This leads to a simplified manufacturing process, for instance through a direct welding process between the cases, which in turn improves productivity. By removing these external components, the overall volume and weight of the battery assembly are reduced, resulting in an improved energy density per volume and per weight. Furthermore, the robust, direct case-to-case connection reduces the risk of short circuits compared to assemblies with external connectors, thereby enhancing safety by lowering the possibility of thermal runaway.

In an embodiment, the first electrode and the fourth electrode may be positive electrodes, the second electrode and the third electrode may be negative electrodes, a material of the first case may include aluminum or stainless steel, and a material of the second case may include stainless steel, nickel, copper, or a combination thereof.

This specific configuration optimizes the battery assembly by defining electrochemically suitable materials for the cases based on their polarity. Using aluminum or stainless steel for the positive case and stainless steel, nickel, or copper for the negative case ensures high electrochemical stability and facilitates a reliable welded connection between the two cases. This material selection contributes to the robust performance and structural integrity of the series connection.

In an embodiment, the first electrode and the fourth electrode may be negative electrodes, the second electrode and the third electrode may be positive electrodes, a material of the first case may include stainless steel, nickel, copper, or a combination thereof, and a material of the second case may include aluminum or stainless steel.

This alternative arrangement defines the appropriate materials for the cases based on their inverted polarity. Selecting stainless steel, nickel, or copper for the negative case and aluminum or stainless steel for the positive case ensures high electrochemical stability. This material choice facilitates a durable welded connection, safeguarding the structural integrity and reliable performance of the series-connected assembly in this alternative configuration.

In an embodiment, the first case and the second case may be welded and coupled to each other in the contact region.

By specifying that the cases are joined by welding, this configuration ensures a robust and permanent bond between the two battery cells. This method provides a highly reliable, low-resistance electrical path for the series connection. As highlighted in the disclosure, employing a welding process simplifies manufacturing, enhances productivity, and creates a structurally integral assembly that can better withstand mechanical stress and vibration.

In an embodiment, the first case may include: a first body including a first reference surface, and first sidewalls extending from the first reference surface, the first body having one open end, and accommodating the first electrode assembly therein; and a first cover sealing the one open end of the first body. The second case may include: a second body including a second reference surface, and second sidewalls extending from the second reference surface, the second body having one open end, and accommodating the second electrode assembly therein; and a second cover sealing the one open end of the second body. At least one of the first sidewalls and at least one of the second sidewalls may be coupled to each other.

This specific embodiment realizes a side-by-side configuration by coupling the cases along their sidewalls. This arrangement dictates the overall form factor of the battery assembly, creating a wider and flatter profile suitable for particular device geometries and influencing the thermal management characteristics.

In an embodiment, one long sidewall of the first sidewalls and one long sidewall of the second sidewalls may be coupled to each other.

By coupling the cases along their long sidewalls, this configuration maximizes the contact area for the welded joint. This results in a mechanically stronger bond and provides a larger cross-sectional area for current flow, which can lead to lower electrical resistance and improved thermal dissipation along the connection.

In an embodiment, one short sidewall of the first sidewalls and one short sidewall of the second sidewalls may be coupled to each other.

This arrangement, which couples the cases along their short sidewalls, offers specific design flexibility. It allows for a different overall assembly footprint and enables various configurations for placing the external electrode terminals on the remaining, more accessible long sidewalls.

In an embodiment, the first electrode terminal may be exposed to the outside of the first case by penetrating through a short sidewall of the first sidewalls, and the second electrode terminal may be exposed to the outside of the second case by penetrating through a short sidewall of the second sidewalls.

This configuration specifies that the external electrode terminals are located on the short sidewalls. This placement provides a compact terminal arrangement on the ends of the battery assembly, which is advantageous for integration into electronic devices where electrical connections are required along the shorter dimension.

In an embodiment, the first electrode terminal may be exposed to the outside of the first case by penetrating through a long sidewall of the first sidewalls, and the second electrode terminal may be exposed to the outside of the second case by penetrating through a long sidewall of the second sidewalls.

By positioning the external electrode terminals on the long sidewalls, this arrangement makes the terminals accessible from the larger faces of the battery assembly. This provides design flexibility for electrical connections and allows for a larger terminal contact area if needed.

In an embodiment, the first electrode terminal and the second electrode terminal may be exposed to face a same direction as each other with respect to the battery assembly.

This arrangement, where both external terminals are exposed to face the same direction, simplifies the external connection design. It allows a single circuit board or connection interface to access both the positive and negative terminals from one side, streamlining integration into a device.

In an embodiment, the first electrode terminal and the second electrode terminal may be exposed to face different directions from each other with respect to the battery assembly.

Positioning the external terminals to face different directions provides significant design flexibility. This configuration is suitable for device layouts that require electrical connections on opposite sides of the battery assembly, enabling more complex or space-optimized integration.

In an embodiment, the first case may include: a first body including a first reference surface, and first sidewalls extending from the first reference surface, the first body having one open end, and accommodating the first electrode assembly therein; and a first cover sealing the one open end of the first body. The second case may include: a second body including a second reference surface, and second sidewalls extending from the second reference surface, the second body having one open end, and accommodating the second electrode assembly therein; and a second cover sealing the one open end of the second body. The first reference surface or the first cover may be coupled to the second reference surface or the second cover.

This embodiment defines a stacked configuration where the cells are joined along their major surfaces (the reference surface or cover). As explicitly stated in the disclosure, this arrangement provides a significantly wider contact area for the connection, resulting in lower electrical resistance and a more efficient series connection compared to sidewall coupling.

In an embodiment, the first electrode terminal may be exposed to the outside of the first case from one of the first sidewalls, and the second electrode terminal may be exposed to the outside of the second case from one of the second sidewalls.

For the stacked configuration, this feature logically places the external terminals on the exposed sidewalls. This ensures that the terminals remain accessible from the periphery of the assembly, allowing for straightforward electrical connections while the major surfaces are utilized for the internal series connection.

In an embodiment, the first electrode terminal may be exposed to the outside of the first case by penetrating through a short sidewall of the first sidewalls, and the second electrode terminal may be exposed to the outside of the second case by penetrating through a short sidewall of the second sidewalls.

This specific arrangement places the external terminals on the short sidewalls of the stacked assembly. This creates a clean and compact design where the main electrical input/output is located at the ends of the assembly, freeing the larger long sidewalls for mounting or structural support.

In an embodiment, the first electrode terminal may be exposed to the outside of the first case by penetrating through a long sidewall of the first sidewalls, and the second electrode terminal may be exposed to the outside of the second case by penetrating through a long sidewall of the second sidewalls.

This alternative arrangement for the stacked configuration positions the external terminals on the long sidewalls. This provides accessibility from the larger faces of the assembly, offering different integration options for connecting to external circuitry depending on the device layout.

In an embodiment, the first electrode terminal and the second electrode terminal may be exposed to face a same direction as each other with respect to the battery assembly.

In an embodiment, the first electrode terminal and the second electrode terminal may be exposed to face different directions from each other with respect to the battery assembly.

In an embodiment, the first case and the second case may be cylindrical cases, and the contact region may be a contact line.

In an embodiment, the first battery cell may further include a first gasket between the first electrode terminal and the first case, and the second battery cell may further include a second gasket between the second electrode terminal and the second case.

According to one or more embodiments of the present disclosure, a battery assembly includes: a first battery cell including: a first electrode assembly including a first electrode and a second electrode; a first case accommodating the first electrode assembly therein, and electrically connected to the first electrode, the first case including: a first body including a first reference surface, and first sidewalls extending from the first reference surface, the first body having one open end, and accommodating first electrode assembly therein; and a first cover sealing the one open end of the first body; and a first electrode terminal exposed outside of the first case, and electrically connected to the second electrode; and a second battery cell including: a second electrode assembly including a third electrode and a fourth electrode; a second case accommodating the second electrode assembly therein, and electrically connected to the third electrode, the second case including: a second body including a second reference surface, and second sidewalls extending from the second reference surface, the second body having one open end, and accommodating the second electrode assembly therein; and a second cover sealing the one open end of the second body; and a second electrode terminal exposed outside of the second case, and electrically connected to the fourth electrode. The first electrode and the fourth electrode have a same polarity as each other, the second electrode and the third electrode have a same polarity as each other, a material of the first case and a material of the second case are different from each other, and at least one of the first sidewalls and at least one of the second sidewalls are welded and coupled to each other.

According to some embodiments of the present disclosure, in a battery assembly in which unit battery cells are connected in series, the volume of the battery assembly may be reduced due to non-use of additional members and/or separate connection members, an energy density per volume and/or per weight may be improved by efficiently utilizing a space, and a decrease in a capacity may be minimized or reduced.

According to some embodiments of the present disclosure, a series connection structure may be easily implemented by a simplified coupling process between cases (e.g., a welding coupling process), so that a productivity of manufacturing a battery assembly may be improved.

According to some embodiments of the present disclosure, a risk of a short circuit between battery cells may be reduced, so that a possibility of an event, such as thermal runaway, may be reduced.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings.
FIG. 1 is a perspective view illustrating an example of a battery assembly according to some embodiments of the present disclosure.
FIG. 2 is a perspective view illustrating an example of a battery cell according to some embodiments of the present disclosure.
FIG. 3 is an exploded perspective view illustrating an example of a battery cell according to some embodiments of the present disclosure.
FIG. 4 is a cross-sectional view illustrating an example of a structure near an electrode terminal according to some embodiments of the present disclosure.
FIG. 5 is a front view illustrating an example of a battery assembly according to some embodiments of the present disclosure.
FIG. 6 is a front view illustrating an example of a battery assembly according to some embodiments of the present disclosure.
FIG. 7 is a front view illustrating an example of a battery assembly according to some embodiments of the present disclosure.
FIG. 8 is a front view illustrating an example of a battery assembly according to some embodiments of the present disclosure.
FIG. 9 is a perspective view illustrating an example of a battery assembly according to some embodiments of the present disclosure.
FIG. 10 is a perspective view illustrating an example of a battery assembly according to some embodiments of the present disclosure.
FIG. 11 is a perspective view illustrating an example of a battery assembly according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used in this specification is for the purpose of describing embodiments of the present disclosure and is not intended to be limiting.

In the drawings, the illustrated sizes and relative sizes of the layers and regions may be exaggerated for convenience of illustration. That is, the present disclosure is not limited to the sizes shown in the drawings. In addition, the same reference numerals may refer to the same components throughout the specification.

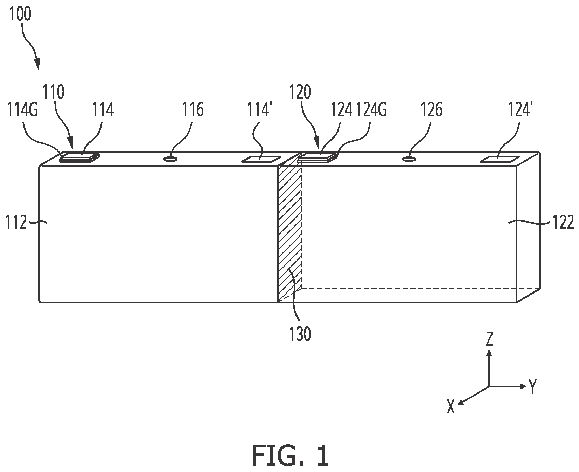

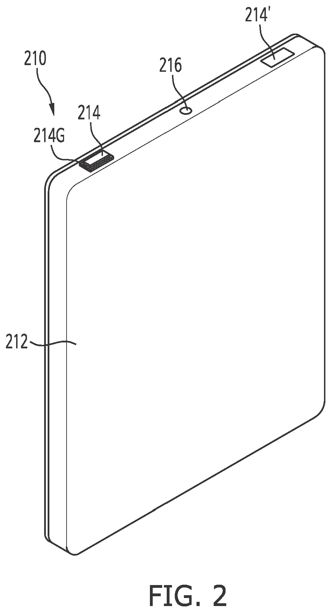

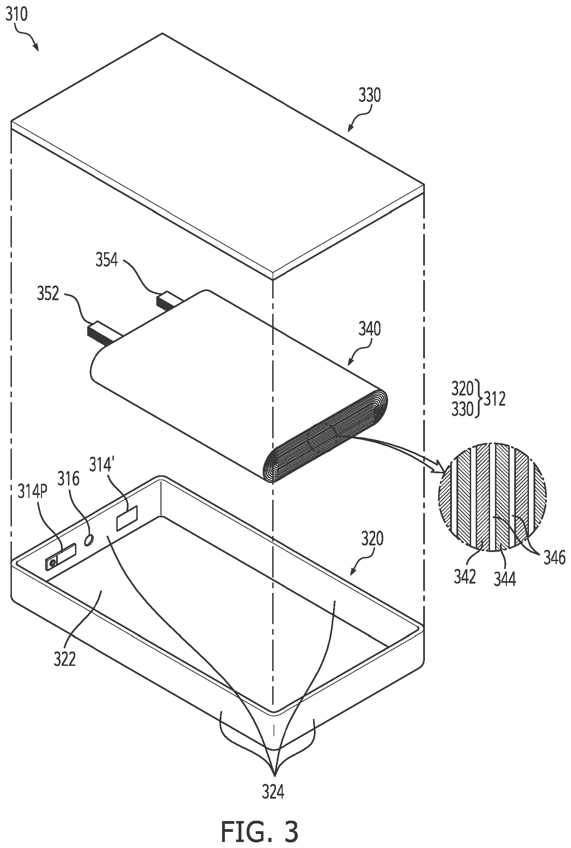

FIG. 1 is a perspective view illustrating an example of a battery assembly according to some embodiments of the present disclosure. FIG. 2 is a perspective view illustrating an example of a battery cell according to some embodiments of the present disclosure. FIG. 3 is an exploded perspective view illustrating an example of a battery cell according to some embodiments of the present disclosure.

Referring to FIGS. 1-3, a battery assembly may be a battery module including a plurality of unit battery cells. A battery assembly 100 according to some embodiments may include a first battery cell 110 and a second battery cell 120. The first battery cell 110 and the second battery cell 120 may be connected to each other in a series manner. For example, the battery assembly 100 may be configured in a 2S1P structure. However, the present disclosure is not limited thereto, and the battery assembly 100 may be configured in a suitable structure, such as a 3S1P structure, a 4S1P structure, a 5S1P structure, or the like, depending on a voltage design. Hereinafter, for convenience of illustration, a case in which the series connection method of the battery assembly is a 2S1P structure will be described in more detail as an example.

In some embodiments, the first battery cell 110 and the second battery cell 120 may be sequentially connected with their positive and negative electrodes crossed with each other, and accordingly, a total voltage may be set to a sum of rated voltages of each battery cell. For example, when the rated voltage of each battery cell is 3.7 V, the total voltage of the battery assembly 100 having the 2S1P structure may be about 7.4 V. In the 2S1P structure, because there is one parallel connection, the total capacity may be maintained to be the same as the capacity of each battery cell. The battery assembly 100 having the 2S1 P structure may be applied to small electronic devices, such as portable electronic devices and small electric devices, because it may be advantageous in terms of design simplicity and thermal management of the system while increasing the voltage.

Referring to FIG. 1, the first battery cell 110 may include a first electrode assembly including a first electrode and a second electrode, a first case 112 that accommodates the first electrode assembly therein and is electrically connected to the first electrode, and a first electrode terminal 114 that is exposed to the outside of the first case 112 and is electrically connected to the second electrode. The second battery cell 120 may include a second electrode assembly including a third electrode and a fourth electrode, a second case 122 that accommodates the second electrode assembly therein and is electrically connected to the third electrode, and a second electrode terminal 124 that is exposed to the outside of the second case 122 and is electrically connected to the fourth electrode. In this case, the first electrode and the fourth electrode may have the same polarity as each other, and the second electrode and the third electrode may have the same polarity as each other. For example, the first electrode and the fourth electrode may be positive electrodes, and the second electrode and the third electrode may be negative electrodes. Or, conversely, the first electrode and the fourth electrode may be negative electrodes, and the second electrode and the third electrode may be positive electrodes.

In some embodiments, the first case 112 and the second case 122 may be coupled to each other in at least one contact region to form a 2S1P structure. For example, as illustrated in FIG. 1, the first case 112 and the second case 122 may be coupled to each other in a contact region 130 of a surface contact. As used herein, coupling in a contact region may mean that two objects are in contact with each other in the entire contact region, but the two objects are coupled to or substantially coupled to each other in at least a portion of the contact region, not necessarily the entire contact region. For example, the first case 112 and the second case 122 may be in contact with each other over the entire contact region 130, and may be coupled to each other over the entire area of the contact region 130. As another example, the first case 112 and the second case 122 may be in contact with each other over the entire contact region 130, and may be coupled to each other at an edge portion of the contact region 130.

The first case 112 and the second case 122 may be welded and coupled to each other in the contact region 130. For example, the first case 112 and the second case 122 may be coupled to each other in the contact region 130 by any one method of laser welding, resistance welding, ultrasonic welding, or a suitable combination thereof. As such, the first battery cell 110 and the second battery cell 120 in the battery assembly 100 may be connected to each other in series.

When the first electrode and the fourth electrode are positive electrodes and the second electrode and the third electrode are negative electrodes, a material of the first case 112, which is electrically connected to the first electrode and has a positive polarity, may include aluminum or stainless steel, and a material of the second case 122, which is electrically connected to the third electrode and has a negative polarity, may include stainless steel, nickel, copper, or a suitable combination thereof.

As another example, when the first electrode and the fourth electrode are negative electrodes and the second electrode and the third electrode are positive electrodes, a material of the first case 112, which is electrically connected to the first electrode and has a negative polarity, may include stainless steel, nickel, copper, or a suitable combination thereof, and a material of the second case 122, which is electrically connected to the third electrode and has a positive polarity, may include aluminum or stainless steel.

The materials of the first case 112 and the second case 122 may be different from each other or may be the same as each other. For example, when the first case 112 has a positive polarity and the second case 122 has a negative polarity, the material of the first case 112 may be aluminum and the material of the second case 122 may be stainless steel. As another example, when the first case 112 has a positive polarity and the second case 122 has a negative polarity, the materials of both the first case 112 and the second case 122 may be stainless steel. However, even in this case, the electrical polarities of the first case 112 and the second case 122 may be different from each other, so that the battery assembly 100 has a 2S1P structure. In addition, the first electrode assembly accommodated in the first case 112 and the second electrode assembly accommodated in the second case 122 may be the same as each other. In this case, the term "same" may mean that the configurations and materials constituting the electrode assemblies are all the same as each other, and the shapes and structures of the electrode assemblies are the same as each other.

Referring to FIG. 1, in some embodiments, the first electrode terminal 114 may be exposed to the outside of the first case 112, and may be electrically connected to the second electrode. The second electrode terminal 124 may be exposed to the outside of the second case 122, and may be electrically connected to the fourth electrode. One end of each of the first electrode terminal 114 and the second electrode terminal 124 may be connected to the second electrode of the first electrode assembly and the fourth electrode of the second electrode assembly, respectively. Another end of each of the first electrode terminal 114 and the second electrode terminal 124 may have a structure that passes through any one surface of the first case 112 and the second case 122, respectively, and extends to the outside. The first electrode terminal 114 or the second electrode terminal 124 may be exposed to the outside, and may have a suitable shape protruding in a height direction (e.g., in the +Z direction) by a suitable volume (e.g., a predetermined volume). For example, each of the first electrode terminal 114 and the second electrode terminal 124 may have a hexahedral shape, but the present disclosure is not limited thereto, and may be cylindrical shape, for example.

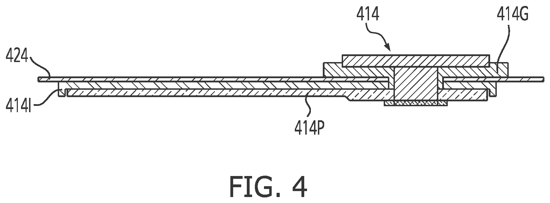

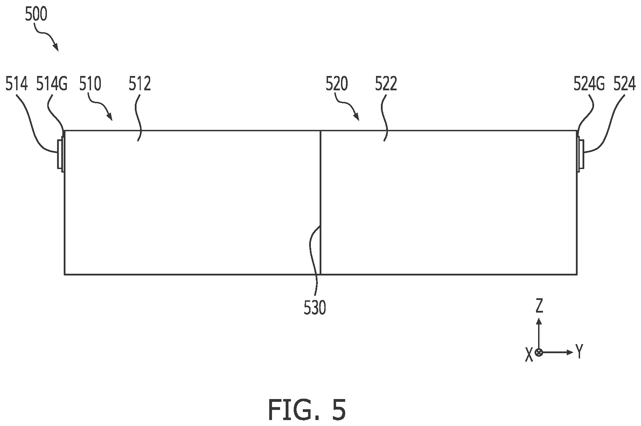

Referring to FIG. 1, in some embodiments, the first battery cell 110 may further include a first gasket 114G disposed between the first electrode terminal 114 and the first case 112. The second battery cell 120 may further include a second gasket 124G disposed between the second electrode terminal 124 and the second case 122. The first electrode terminal 114 and the second electrode terminal 124 may be electrically insulated from the first case 112 and the second case 122, respectively, by the first gasket 114G and the second gasket 124G, which are each made of an insulating material. The shapes of the first gasket 114G and the second gasket 124G are not particularly limited, as long as they have a suitable shape so that the first electrode terminal 114 and the second electrode terminal 124 do not contact the first case 112 and the second case 122, respectively. A structure near (e.g., adjacent to) the terminal will be described in more detail below with reference to FIG. 4, and the position of the terminal will be described in more detail below with reference to FIG. 5 and subsequent figures.

The first battery cell 110 may include a third electrode terminal 114' disposed on at least one surface excluding the contact region 130 of the first case 112. The second battery cell 120 may include a fourth electrode terminal 124' disposed on at least one surface excluding the contact region 130 of the second case. The third electrode terminal 114' and the fourth electrode terminal 124' may have a plate shape or a thin film shape as illustrated in FIG. 1, but are not limited thereto, and may have a suitable shape exposed to the outside and protruding in a height direction (e.g., the +Z direction) by a suitable volume (e.g., a predetermined volume), like that of the first electrode terminal 114 or the second electrode terminal 124. The third electrode terminal 114' and the fourth electrode terminal 124' may be electrically connected to the first case 112 and the second case 122, respectively. In other words, the third electrode terminal 114' may have the same polarity as that of the first case 112, which is electrically connected to the first electrode of the first electrode assembly. The fourth electrode terminal 124' may have the same polarity as that of the second case 122, which is electrically connected to the third electrode of the second electrode assembly. For example, when the first electrode terminal 114 is electrically connected to the positive electrode of the first electrode assembly and has a positive polarity, the second electrode terminal 124 may have a negative polarity, the third electrode terminal 114' may have a negative polarity, and the fourth electrode terminal 124' may have a positive polarity, in order for the battery assembly 100 to have a 2S1P structure.

The following description of the battery cells 210 and 310 with reference to FIG. 2 and FIG. 3 may be applied to the first battery cell 110 or the second battery cell 120 described above with reference to FIG. 1. Referring to FIG. 3, a battery cell 310 may include an electrode assembly 340 including a first electrode 342 and a second electrode 344 (e.g., at least one or more electrode assemblies and the like in which a separator 346, which is an insulator, is interposed between a positive electrode and a negative electrode and then wound or stacked), and a case 312 in which the electrode assembly 340 is housed. The battery cell 310 may be a kind of secondary battery. The positive electrode and the negative electrode may include a coating part, which is an area where an active material is applied to a current collector formed of a thin metal foil, and an uncoated part, which is an area where the active material is not coated. The positive electrode and the negative electrode may be wound with an insulator, such as a separator, interposed therebetween. However, the present disclosure is not limited thereto, and the electrode assembly 340 may have a structure in which a plurality of sheets of positive and negative electrodes are alternately stacked with a separator 346 interposed therebetween. In addition, the electrode assembly 340 may have any suitable structure including the first electrode 342 and the second electrode 344.

The first electrode 342 of the electrode assembly 340 may be connected to a terminal plate 314P through a first electrode tab 352. The first electrode tab 352 may be integrally formed with the first electrode 342, or may be a separate conductive member (e.g., a conductive thin film) coupled to an uncoated part of the first electrode 342. The terminal plate 314P may be electrically connected to a first electrode terminal (e.g., 214 of FIG. 2) exposed to the outside of the case 312, and may be disposed inside a sidewall 324 of a body 320 of the case 312. The second electrode 344 of the electrode assembly 340 may be connected to a third electrode terminal 314' through a second electrode tab 354. The third electrode terminal 314' may be disposed inside the sidewall 324 of the body 320, and may pass through the sidewall 324 to be exposed to the outside of the case 312. As illustrated in FIG. 2, the third electrode terminal 214' exposed to the outside may have a thickness corresponding to the thickness of the case 212, and may be disposed within the thickness of the case 212. As another example, the third electrode terminal 214' may protrude to the outside of the case 212 by a suitable thickness (e.g., a predetermined thickness). The shape of the third electrode terminal 214' and 314' is not particularly limited, and may be variously modified as needed or desired.

For example, when the first electrode 342 is a positive electrode and the second electrode 344 is a negative electrode, the first electrode tab 352 may be a positive electrode tab, the first electrode terminal may be a positive electrode terminal, the second electrode tab 354 may be a negative electrode tab, and the third electrode terminal 314' may be a negative electrode terminal.

Referring to FIG. 3, the battery cell 310 may include the electrode assembly 340 including the electrodes 342 and 344, and the case 312 accommodating the electrode assembly 340 therein. The case 312 forms the overall appearance of the battery cell 310, and may be formed of a conductive metal. In addition, the case 312 may provide a space in which the electrode assembly 340 is accommodated. The case 312 according to some embodiments may include the body 320 in which the electrode assembly 340 is accommodated, and a cover 330 that seals one open end of the body 320.

According to some embodiments, the body 320 may include a reference surface 322, and the sidewall 324 extending from the reference surface 322 (e.g., surrounding around a periphery of the reference surface 322). For example, the sidewall 324 perpendicular to or substantially perpendicular to the reference surface 322 may be formed along the circumference of the reference surface 322. In some embodiments, when the reference surface 322 is a polygon, a plurality of sidewalls 324 corresponding to a plurality of sides (e.g., edges) of the reference surface 322, respectively, may be formed. The reference surface 322 of the body 320 may have any suitable shape. For example, when the shape of the reference surface 322 of the body 320 is a quadrangle as illustrated in FIG. 3, four sidewalls 324 corresponding to four sides may be formed. In this case, the sidewall 324 may be formed surrounding (e.g., around a periphery of) the four sides of the quadrangular reference surface. As another example, the shape of the reference surface 322 may be circular. In this case, the sidewall 324 may be formed surrounding (e.g., around a periphery of) the circumference of the circular reference surface 322.

According to some embodiments, one end of the body 320 may be open. For example, the body 320 may have a suitable shape in which one of two bases is omitted in a prism or cylinder. In this case, the overall shape of the body 320 may be approximately the shape of a cup. For example, the body 320 may be in the shape of a cup having a surface (e.g., an end) opposite to the reference surface 322 that is open. According to some embodiments, the electrode terminal may be disposed on at least one sidewall among a plurality of sidewalls 324 of the body 320.

The body 320 may provide an accommodation space for accommodating the electrode assembly 340 including the electrodes 342 and 344. The electrode assembly 340 may be accommodated in the accommodation space of the body 320.

According to some embodiments, the cover 330 may have the same or substantially the same (or similar) shape as that of the reference surface 322 of the body 320. The cover 330 may be parallel to or substantially parallel to the reference surface 322 of the body 320. For example, both the cover 330 and the reference surface 322 may be parallel to or substantially parallel to the YZ plane of FIG. 1, for example.

In some embodiments, the cover 330 may be disposed on one open end or one surface of the body 320, such that one surface of the cover 330 (e.g., the lower surface based on FIG. 3) seals the one open end of the body 320. As an example, at least a portion of the outer periphery of one surface of the cover 330 (e.g., the lower surface based on FIG. 3) may contact and be joined to at least a portion of the upper end surface of the sidewall 324 of the body 320, so that the cover 330 may seal the one open end of the body 320 while being parallel to or substantially parallel to the reference surface 322 of the body 320. As such, the size of the cover 330 may be the same or substantially the same as (or similar to) the size of an area surrounded (e.g., around a periphery thereof) by the upper end surface of the sidewall 324 of the body 320.

According to some embodiments, the case 312 may be formed by joining the body 320 and the cover 330 to each other. For example, the case 312 may be formed by joining the body 320 and the cover 330 to each other by a metal joining (e.g., welding, brazing, soldering, or the like). A flange for joining or resulting from the joining may be formed at one open end of the body 320. In some embodiments, the flange may be completely or partially removed, or may not be removed, after the joining. As another example, as illustrated in FIG. 3, the body 320 in which a flange is not formed at the one open end may be used as a component of the case 312. As illustrated in FIG. 2, when there is no flange, because no flange in the battery cell 210 protrudes outward from the case 212, the case 212 may have a hexahedral shape or substantially a hexahedral shape.

Referring to FIG. 2 and FIG. 3, in some embodiments, the cases 212 and 312 may include an electrolyte injection port 216 and 316. For example, the electrolyte injection port 216 and 316 may be a through-hole formed on at least one surface of the case 212 and 312, and may be formed to inject an electrolyte into the case 212 and 312 after the body 320 and the cover 330 are joined and sealed together. The electrolyte injection port 216 and 316 may be sealed with a sealing member after the electrolyte is injected.

The battery cell 210 and 310 may be a lithium battery cell, a sodium battery cell, or the like. However, the present disclosure is not limited thereto, and the battery cell 210 and 310 includes all suitable batteries that may repeatedly provide electricity by charging and discharging. In some embodiments, when the battery cell 210 and 310 is a lithium battery cell, it may be used in an electric vehicle (EV) because of its excellent cycle life characteristics and high-rate characteristics. For example, the battery cell 210 and 310 may be used in a hybrid vehicle, such as a plug-in hybrid electric vehicle (PHEV). In addition, a lithium battery cell may be used in various suitable fields that require or desire storage of a large amount of electric power. For example, the battery cell 210 and 310 may be used in an energy storage system (ESS), an electric bicycle, a power tool, and the like.

Referring to FIG. 1, in the battery assembly 100 according to some embodiments, the first case 112 of the first battery cell 110 may include a first body and a first cover. The first body includes a first reference surface, and first sidewalls extending from the first reference surface. The first body has one open end, and accommodates the first electrode assembly therein. The first cover seals the one open end of the first body. In addition, the second case 122 of the second battery cell 120 may include a second body and a second cover. The second body includes a second reference surface, and second sidewalls extending from the second reference surface. The second body has one open end, and accommodates the second electrode assembly therein. The second cover seals the one open end of the second body. In this case, at least one of the first sidewalls and at least one of the second sidewalls may be coupled to each other. For example, at least one of the first sidewalls and at least one of the second sidewalls may be coupled to each other in the contact region 130.

For example, as illustrated in FIG. 1, one short sidewall among the first sidewalls and one short sidewall among the second sidewalls may be coupled to each other. In this case, the first electrode terminal 114 may be exposed to the outside of the first case 112 by penetrating through a long sidewall among the first sidewalls, and the second electrode terminal 124 may be exposed to the outside of the second case 122 by penetrating through a long sidewall among the second sidewalls.

As used herein, a long sidewall may mean one of a pair of sidewalls that are relatively larger than other sidewalls among the plurality of sidewalls described above that constitute the case in a rectangular or substantially rectangular parallelepiped case. The long sidewalls may be spaced apart from and face or oppose each other. As used herein, a short sidewall may mean one of a pair of sidewalls that are adjacent to the long sidewalls, and are relatively smaller than other sidewalls in a rectangular or substantially rectangular parallelepiped case. The short sidewalls may be spaced apart from and face or oppose each other.

Referring to FIG. 1, in some embodiments, the first electrode terminal 114 and the second electrode terminal 124 may be exposed to face the same direction as each other with respect to the battery assembly 100. For example, the first electrode terminal 114 of the first battery cell 110 may be exposed in the Z direction at any suitable position on a long sidewall of the first case 112, and the second electrode terminal 124 of the second battery cell 120 may be exposed in the Z direction at any suitable position on a long sidewall of the second case 122.

FIG. 4 is a cross-sectional view illustrating an example of a structure near an electrode terminal according to some embodiments of the present disclosure. The content described hereinafter with reference to FIG. 4 may be applied to a first electrode terminal (e.g., 114 of FIG. 1) and a third electrode terminal (e.g., 114' of FIG. 1) of a first battery cell (e.g., 110 of FIG. 1), and a second electrode terminal (e.g., 124 of FIG. 1) and a fourth electrode terminal (e.g., 124' of FIG. 1) of a second battery cell (e.g., 120 of FIG. 1).

In some embodiments, an electrode terminal 414 may be exposed to the outside of a case by penetrating through a sidewall 424 of a body of the case. In addition, the electrode terminal 414 may be electrically connected to an electrode of an electrode assembly (e.g., any one of a first electrode or a second electrode). The electrode terminal 414 may be electrically connected to the electrode of the electrode assembly via a terminal plate 414P. For example, the terminal plate 414P may be connected to an electrode tab. The terminal plate 414P may serve as a current collector for a current flowing from the electrode. The electrode terminal 414 may be electrically insulated from the sidewall 424 of the case through a gasket 414G disposed between the case and the electrode terminal 414P. In addition, an insulating member 414I may be disposed between the terminal plate 414P and the sidewall 424 of the case (e.g., the inner surface of the sidewall), so that the terminal plate 414P and the electrode terminal 414 may be electrically insulated from the case.

The electrode terminal 414 according to some embodiments may pass through a through-hole formed at a corresponding position of the sidewall 424 of the case, the insulating member 4141, and the terminal plate 414P, so that one end may be located inside the case and another end may be located outside. For example, the electrode terminal 414 may be formed in a rivet structure. In more detail, the electrode terminal 414 may be mechanically fixed to the case by inserting a rivet made of a metal material into the through-hole of the case, and then pressing a protruding end of the rivet to expand it. In this case, an electrical insulation may be maintained by interposing the gasket 414G on top of the rivet-structured electrode terminal 414, and the insulating member 414I below the rivet-structured electrode terminal 414. An airtightness may also be secured by further providing a sealing material as needed or desired.

The gasket 414G and the insulating member 414I may each be made of a polymer including ethylene propylene diene monomer (EPDM) rubber, polypropylene (PP), polyimide (PI), polyethylene terephthalate (PET), polycarbonate (PC), or a suitable combination thereof. However, the materials of the gasket 414G and the insulating member 414I are not limited to the materials described above, and may include various suitable materials having excellent plasticity and insulation properties as needed or desired.

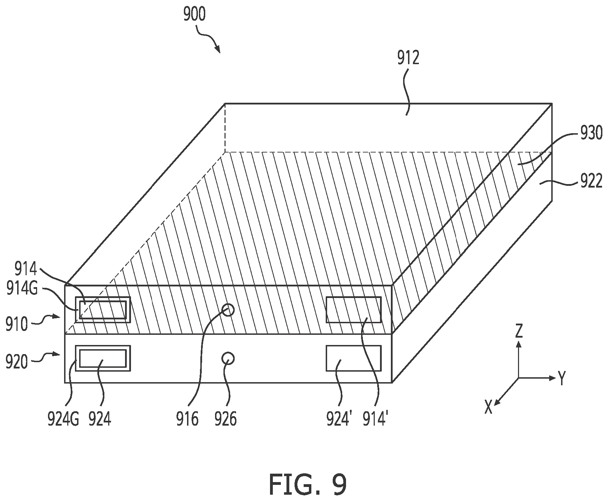

FIG. 5 to FIG. 8 are front views illustrating examples of a battery assembly according to some embodiments of the present disclosure. FIG. 9 to FIG. 11 are perspective views illustrating examples of a battery assembly according to some embodiments of the present disclosure. Hereinafter, some embodiments that may be different from the embodiments described above with reference to FIG. 1, in which a first battery cell and a second battery cell of a battery assembly may be connected to each other in a series manner, may be described in more detail with a focus on configurations that may be different for each drawing.

In a battery assembly 500 according to some embodiments, at least one of the first sidewalls and at least one of the second sidewalls may be coupled to each other. For example, referring to FIG. 5, in the battery assembly 500 according to some embodiments, one short sidewall among the first sidewalls and one short sidewall among the second sidewalls may be coupled to each other. In other words, one short sidewall among the first sidewalls and one short sidewall among the second sidewalls may be coupled to and/or contact each other to form a contact region 530. In this case, for example, the contact region 530 may be a short sidewall among the first sidewalls or a short sidewall among the second sidewalls. A first case 512 includes a first body that includes a first reference surface, and first sidewalls extending from the first reference surface. The first body has one open end, and accommodates a first electrode assembly therein. The first case 512 includes a first cover that seals the one open end of the first body. The second case 522 includes a second body that includes a second reference surface, and second sidewalls extending from the second reference surface. The second body has one open end, and accommodates a second electrode assembly, which is the same or substantially the same as the first electrode assembly, therein. The second case 522 includes a second cover that seals the one open end of the second body.

Referring to FIG. 5, in some embodiments, a first electrode terminal 514 may be exposed to the outside of the first case 512 by penetrating through a short sidewall among the first sidewalls, and a second electrode terminal 524 may be exposed to the outside of the second case 522 by penetrating through a short sidewall among the second sidewalls.

In some embodiments, the first electrode terminal 514 and the second electrode terminal 524 may be exposed to face different directions from each other (e.g., the +Y direction and the -Y direction) with respect to the battery assembly 500. A first gasket 514G may electrically insulate the first electrode terminal 514 and the first case 512 from each other, and a second gasket 524G may electrically insulate the second electrode terminal 524 and the second case 522 from each other. Accordingly, for example, when the first electrode terminal 514 is a positive electrode terminal, the first case 512 has a negative polarity, the second case 522, which is contacted to and/or coupled through a contact region 530, has a positive polarity, and the second electrode terminal 524 may be a negative electrode terminal. As the first case 512 and the second case 522 having different electrical polarities are coupled to each other at one short sidewall, a series connection structure of the battery assembly 500 may be implemented by a relatively simpler inter-case coupling process (e.g., welding).

Unlike that shown in FIG. 5, in some embodiments, the first electrode terminal 514 and the second electrode terminal 524 may have different Y-direction axes.

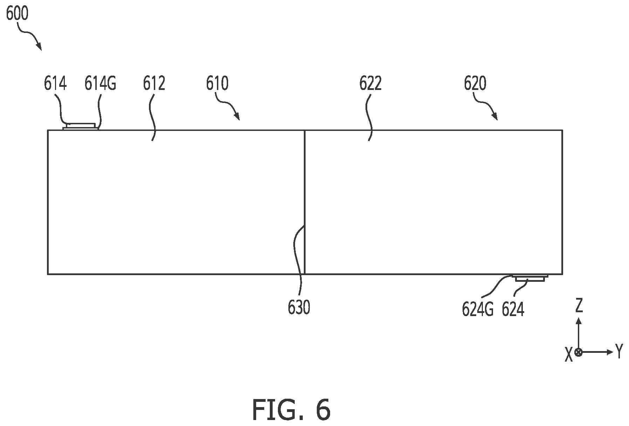

Referring to FIG. 6, in a battery assembly 600 according to some embodiments, one short sidewall among the first sidewalls and one short sidewall among the second sidewalls may be coupled to and/or contacted to each other to form a contact region 630. In addition, unlike that described above with reference to FIG. 5, a first electrode terminal 614 may be exposed to the outside of a first case 612 by penetrating through a long sidewall among the first sidewalls, and a second electrode terminal 624 may be exposed to the outside of a second case 622 by penetrating through a long sidewall among the second sidewalls. In this case, unlike that described above with reference to FIG. 1, the first electrode terminal 614 and the second electrode terminal 624 may be exposed to face different directions from each other with respect to the battery assembly 600. For example, the first electrode terminal 614 may be exposed in the +Z direction by penetrating through any suitable region of one long sidewall among the first sidewalls, and the second electrode terminal 624 may be exposed in the -Z direction by penetrating through any suitable region of one long sidewall among the second sidewalls.

A first gasket 614G may electrically insulate the first electrode terminal 614 and the first case 612 from each other, and a second gasket 624G may electrically insulate the second electrode terminal 624 and the second case 622 from each other. Accordingly, for example, when the first electrode terminal 614 is a negative electrode terminal, the first case 612 has a positive polarity, the second case 622, which is contacted and/or coupled through a contact region 630, has a negative polarity, and the second electrode terminal 624 may be a positive electrode terminal.

Unlike that described above with reference to FIG. 6, in some embodiments, the first electrode terminal 614 and the second electrode terminal 624 may share the same Z-direction axis as each other.

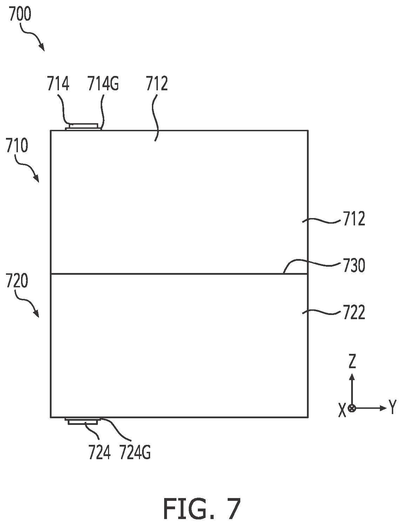

In a battery assembly 700 according to some embodiments, at least one of the first sidewalls and at least one of the second sidewalls may be coupled to each other. For example, referring to FIG. 7, in the battery assembly 700 according to some embodiments, one long sidewall among the first sidewalls and one long sidewall among the second sidewalls may be coupled to each other. In other words, one long sidewall among the first sidewalls and one long sidewall among the second sidewalls may be coupled to and/or contacted to each other to form a contact region 730. In this case, for example, the contact region 730 may be a long sidewall among the first sidewalls or a long sidewall among the second sidewalls. A first case 712 includes a first body that includes a first reference surface, and first sidewalls extending from the first reference surface. The first body has one open end, and accommodates a first electrode assembly therein. The first case 712 includes a first cover that seals the one open end of the first body. A second case 722 includes a second body that includes a second reference surface, and second sidewalls extending from the second reference surface. The second body has one open end, and accommodates a second electrode assembly, which is the same or substantially the same as the first electrode assembly, therein. The second case 722 includes a second cover that seals the one open end of the second body.

Referring to FIG. 7, as described above with reference to FIG. 6, a first electrode terminal 714, which is electrically insulated from the first case 712 through a first gasket 714G, is exposed to the outside of the first case 712 by penetrating through a long sidewall among the first sidewalls. A second electrode terminal 724, which is electrically insulated from the second case 722 through a second gasket 724G, may be exposed to the outside of the second case 722 by penetrating through a long sidewall among the second sidewalls.

Accordingly, for example, when the first electrode terminal 714 is a positive electrode terminal, the first case 712 has a negative polarity, the second case 722, which is contacted and/or coupled through a contact region 730, has a positive polarity, and the second electrode terminal 724 may be a negative electrode terminal. As such, as the first case 712 and the second case 722 having different electrical polarities from each other are coupled to each other at one long sidewall, a series connection structure of the battery assembly 700 may also be implemented by a relatively simpler inter-case coupling process (e.g., welding).

As illustrated in FIG. 7, the first electrode terminal 714 and the second electrode terminal 724 may be exposed to face different directions from each other (e.g., the +Z direction and the -Z direction) with respect to the battery assembly 700. For example, the first electrode terminal 714 and the second electrode terminal 724 may share the same Z-direction axis as each other. However, the present disclosure is not limited thereto, and the first electrode terminal 714 may be formed in any suitable region of one long sidewall among the first sidewalls, and the second electrode terminal 724 may be formed in any suitable region of one long sidewall among the second sidewalls, so that, unlike that described above with reference to FIG. 7, the first electrode terminal 714 and the second electrode terminal 724 may have different Z-direction axes from each other.

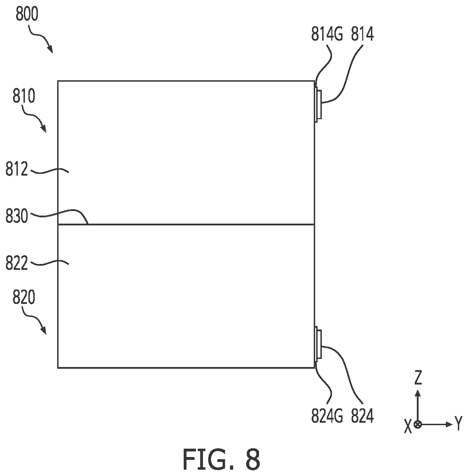

Referring to FIG. 8, in a battery assembly 800 including a first battery cell 810 and a second battery cell 820 according to some embodiments, one long sidewall among the first sidewalls and one long sidewall among the second sidewalls may be coupled to and/or contacted to each other to form a contact region 830. However, unlike that described above with reference to FIG. 7, a first electrode terminal 814, which is electrically insulated from a first case 812 by a first gasket 814G, may be exposed to the outside of the first case 812 by penetrating through a short sidewall among the first sidewalls, and a second electrode terminal 824, which is electrically insulated from a second case 822 by a second gasket 824G, may be exposed to the outside of the second case 822 by penetrating through a short sidewall among the second sidewalls. In this case, the first electrode terminal 814 and the second electrode terminal 824 may be exposed to face the same direction as each other (in the +Y direction, or an opposite direction to that illustrated in FIG. 8, such as the -Y direction) with respect to the battery assembly 800.

In this case, for example, when the first electrode terminal 814 is a negative electrode terminal, the first case 812 has a positive polarity, the second case 822, which is contacted and/or coupled through the contact region 830, has a negative polarity, and the second electrode terminal 824 may be a positive electrode terminal. As such, as the first case 812 and the second case 822 having different electrical polarities are coupled to each other at one long sidewall, a series connection structure between the first battery cell 810 and the second battery cell 820 may also be implemented by a relatively simpler inter-case coupling process (e.g., welding).

The battery assembly 500, 600, 700, and 800 according to some embodiments may include the first battery cell 510, 610, 710, and 810 including the first electrode assembly including the first electrode and the second electrode, the first case 512, 612, 712, and 812 that accommodates the first electrode assembly therein and is electrically connected to the first electrode, and the first electrode terminal 514, 614, 714, and 814 that is exposed to the outside of the first case 512, 612, 712, and 812 and is electrically connected to the second electrode, and the second battery cell 520, 620, 720, and 820 including the second electrode assembly including the third electrode and the fourth electrode, the second case 522, 622, 722, and 822 that accommodates the second electrode assembly therein and is electrically connected to the third electrode, and the second electrode terminal 524, 624, 724, and 824 that is exposed to the outside of the second case 522, 622, 722, and 822 and is electrically connected to the fourth electrode. In this case, the first electrode and the fourth electrode may have the same polarity as each other, and the second electrode and the third electrode may have the same polarity as each other. In addition, the first case 512, 612, 712, and 812 includes the first body that includes a first reference surface and first sidewalls extending from the first reference surface, has one open end, and in which the first electrode assembly is accommodated, and a first cover that seals the one open end of the first body. The second case 522, 622, 722, and 822 includes the second body that includes a second reference surface and second sidewalls extending from the second reference surface, has one open end, and in which the second electrode assembly is accommodated, and a second cover that seals the one open end of the second body. In addition, a material of the first case 512, 612, 712, and 812 and a material of the second case 522, 622, 722, and 822 may be different from each other (e.g., a case where the material of the first case 512, 612, 712, and 812, which is connected to the negative electrode of the first electrode assembly and has a negative polarity, is stainless steel, and the material of the second case 522, 622, 722, and 822, which is connected to the positive electrode of the second electrode assembly and has a positive polarity, is aluminum), and at least one of the first sidewalls (e.g., a short sidewall or a long sidewall) and at least one of the second sidewalls (e.g., a short sidewall or a long sidewall) may be welded and coupled to each other (e.g., by laser welding).

Referring to FIG. 9, in a battery assembly 900 including a first battery cell 910 and a second battery cell 920, a first case 912 includes a first body that includes a first reference surface and first sidewalls extending from the first reference surface, has one open end, and in which a first electrode assembly is accommodated, and a first cover that seals the one open end of the first body. A second case 922 includes a second body that includes a second reference surface and second sidewalls extending from the second reference surface, has one open end, and accommodating a second electrode assembly, and a second cover that seals the one open end of the second body. The first reference surface or the first cover may be coupled to and/or contacted with the second reference surface or the second cover to form a contact region 930. In this case, the contact region 930 may be one surface of the reference surface or one surface of the cover. For example, the first reference surface of the first battery cell 910 may be coupled to the second cover of the second battery cell 920. However, the present disclosure is not limited thereto, and various combinations of coupling may be possible. In this case, a first electrode terminal 914, which is electrically insulated from the first case 912 by a first gasket 914G, is exposed to the outside of the first case 912 from one of the first sidewalls, and a second electrode terminal 924, which is electrically insulated from the second case 922 by a second gasket 924G, may be exposed to the outside of the second case 922 from one of the second sidewalls. For example, as illustrated in FIG. 9, the first electrode terminal 914 and the second electrode terminal 924 may be exposed to the outside by penetrating through a short sidewall of the first sidewalls and a short sidewall of the second sidewalls, respectively. As another example, unlike that described above with reference to FIG. 9, the first electrode terminal 914 and the second electrode terminal 924 may be exposed to the outside by penetrating through a long sidewall of the first sidewalls and a long sidewall of the second sidewalls, respectively.

In some embodiments, the first electrode terminal 914 and the second electrode terminal 924 may be exposed to face the same direction as each other (e.g., the +X direction) with respect to a battery assembly 900.

In some embodiments, the first case 912 and the second case 922 may be coupled (e.g., welded and coupled) to each other along at least a portion of the edge of the contact region 930. For example, after stacking the first case 912 and the second case 922 so that their reference surfaces or covers face each other, a laser welding may be performed along the edge of the contact region 930 to relatively simply connect the first battery cell 910 and the second battery cell 920 to each other. An area of the contact region 930 that is not coupled by welding and the like may be in contact between the first case 912 and the second case 912. A series connection structure between the first battery cell 910 and the second battery cell 920 may be implemented through simple coupling and/or contact between the first case 912 and the second case 922 having different electrical polarities from each other.

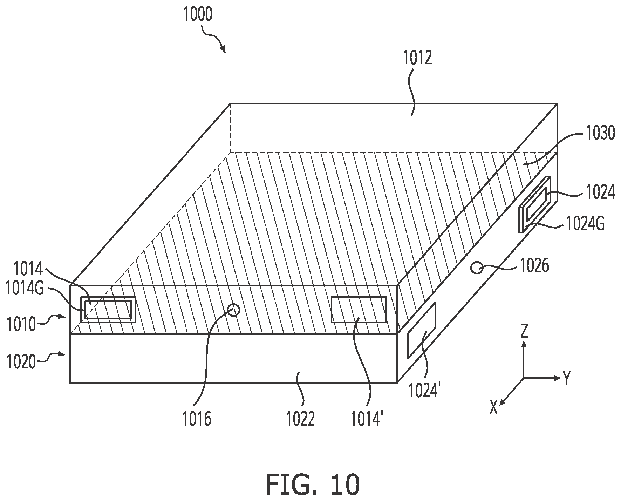

Referring to FIG. 10, unlike that described above with reference to FIG. 9, in some embodiments, a first electrode terminal 1014, which is electrically insulated from a first case 1012 by a first gasket 1014G, and a second electrode terminal 1024, which is electrically insulated from a second case 1022 by a second gasket 1024G, may be exposed to face different directions from each other with respect to a battery assembly 1000. The first electrode terminal 1014 is exposed to the outside by penetrating through a short sidewall of the first sidewalls of the first case 1012, and the second electrode terminal 1024 may be exposed to the outside by penetrating through a long sidewall of the second sidewalls of the second case 1022. Accordingly, as an example, the first electrode terminal 1014 may be exposed in the +X direction, and the second electrode terminal 1024 may be exposed in the +Y direction. As another example, unlike that described above with reference to FIG. 10, the first electrode terminal 1014 may be exposed in the +X direction, and the second electrode terminal may be exposed in the -Y direction.

Referring to FIG. 9 and FIG. 10, in some embodiments, a third electrode terminal 914' and 1014' of the first battery cell 910 and 1010 may be disposed on a first sidewall together with the first electrode terminal 914 and 1014. A fourth electrode terminal 924' and 1024' of the second battery cell 920 and 1020 may be disposed on a second sidewall together with the second electrode terminal 924 and 1024. However, the present disclosure is not limited thereto, and for example, the third electrode terminal 914' and 1014' and the fourth electrode terminal 924' and 1024' may be disposed in any suitable region of the first sidewall and the second sidewall, respectively. As another example, the third electrode terminal 914' and 1014' and the fourth electrode terminal 924' and 1024' may be disposed on a reference surface or a cover.

Referring to FIG. 9 and FIG. 10, a separate connection member for connection between the first battery cell 910 and 1010 and the second battery cell 920 and 1020 may not be used or required, and because coupling and/or contact may be made through a reference surface or a cover that is wider than a sidewall, an electrical resistance may be lower than that of the battery assembly described above with reference to FIG. 5 to FIG. 8.

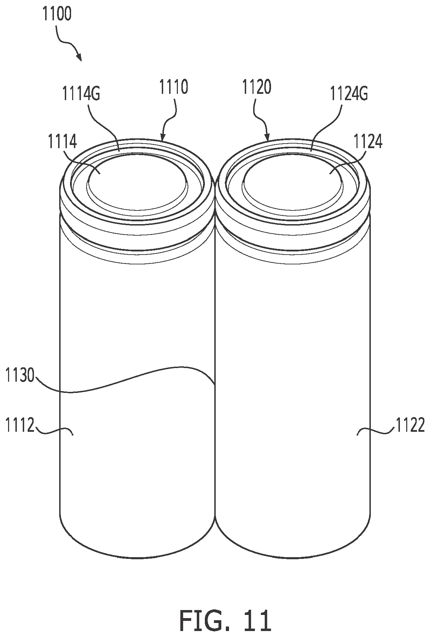

Referring to FIG. 11, in a battery assembly 1000 including a first battery cell 1110 and a second battery cell 1120, which are cylindrical cells according to some embodiments, a first case 1112 and a second case 1122 may each be a cylindrical case. In this case, a contact region 1130 where the first case 1112 and the second case 1122 are coupled to each other may be a contact line. In other words, the first case 1112 and the second case 1122 may be coupled to and/or contacted to each other to form a contact line. However, the present disclosure is not limited thereto, and the first battery cell 1110 and the second battery cell 1120 may be connected to each other in series by having at least a part of the side surface of the first case 1112 and at least a part of the side surface of the second case 1122 be in contact with or coupled to each other.

As described above, even if (e.g., when) the shape of the case is changed to another suitable shape, such as a cylinder instead of a hexahedron, a connection structure having an internal electrode is configured so that the electrical polarity of the cases between two or more unit battery cells is different from each other, and a 2S1P connection structure may be implemented even through a simpler connection between two cases with different electrical polarities from each other.

A first electrode terminal 1114, which is electrically insulated from the first case 1112 by a first gasket 1114G, and a second electrode terminal 1124, which is electrically insulated from the second case 1122 by a second gasket 1124G, may be exposed to face the same direction as each other (e.g., an upward or a downward direction) with respect to the battery assembly 1100. As another example, the first electrode terminal 1114 and the second electrode terminal 1124 may face opposite directions from each other, for example, such that the first electrode terminal 1114 may face an upward direction, and the second electrode terminal 1124 may face a downward direction.

The gasket may be adopted as long as it has a suitable structure, material, and shape that may perform an insulating function. For example, the gasket may be disposed between the upper side surface of the case of a cylindrical cell and an electrode terminal to contribute to forming an airtight structure by a crimping process.

As described above with reference to FIG. 1 to FIG. 11, a battery assembly having a series connection structure (e.g., 2S1P) may be manufactured without a risk of a short circuit through a simpler coupling process between the first case and the second case of a first battery cell and a second battery cell.

In order to implement a series connection structure using battery cells of the same kind in which the electrical polarity of two cases is the same and the electrode assemblies accommodated therein are the same, for example, a first case of a first battery cell (e.g., a hexahedral case) and a second electrode terminal of a second battery cell may be coupled to and/or contacted with each other. In more detail, a second electrode terminal exposed to the outside by penetrating through a long sidewall of the first case and a long sidewall of a second case (e.g., a hexahedral case) may be connected to each other. In this case, a separation distance between the first case of the first battery cell and the second case of the second battery cell may correspond to approximately a thickness of the second electrode terminal of the second battery cell, and may be relatively short. Therefore, a possibility of the first case and the second case coming into contact with each other may be high, and a risk of a short circuit between the first case and the second case, which have the same electrical polarity as each other, may be high. To prevent or substantially prevent this, the outer surface of the battery cell may be coated with a non-conductor or shielded with an insulating member (e.g., a shrink tube and the like). However, in this case, the volume of the battery assembly increases, and the energy density per volume and/or per weight decreases due to a separate additional member.

In order to implement a series connection structure using battery cells of the same kind in which the electrical polarity of two cases is the same and the electrode assemblies accommodated therein are the same, for example, a first case of a first battery cell and a second electrode terminal of a second battery cell may be connected to each other through a separate connection member (e.g., a conductive connection member). In more detail, with a short sidewall of the first sidewalls of the first case and a short sidewall of the second sidewalls of the second case spaced apart from each other and facing each other, one end of the connection member may be connected to a long sidewall of the first case, and the other end of the connection member may be connected to a second electrode terminal exposed to the outside by penetrating through a long sidewall of the second case. In this case, the connection member may have the same electrical polarity as that of the second case, and a possibility of the connection member and the second case coming into contact with each other may be high. Therefore, a possibility of a short circuit occurring within the battery assembly may be high. As another example, the volume of the battery assembly may increase, and the energy density per volume and/or per weight may decrease due to the connection member.

As described above, when implementing a series connection structure using battery cells of the same kind in which the electrical polarity of two cases is the same and the electrode assemblies accommodated therein are the same, a possibility of a short circuit between the first battery cell and the second battery cell may be high, or the energy density per volume and/or per weight of the battery assembly may be lowered due to the additional member and/or a separate connection member.

However, according to some embodiments of the present disclosure described above, in the battery assembly 100 to 1100, the volume of the battery assembly 100 to 1100 may be reduced due to the non-use of additional members and/or separate connection members, the energy density per volume and/or per weight may be improved by efficiently utilizing a space, and a decrease in a capacity may be minimized or reduced. In addition, a series connection structure may be easily implemented by a simpler coupling process between cases (e.g., a welding coupling process), so a productivity may be improved. In addition, a risk of a short circuit between battery cells may be reduced, so a possibility of an event, such as thermal runaway, may be lowered.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

### DESCRIPTION OF SOME REFERENCE SYMBOLS

100: battery assembly
110: first battery cell
112: first case
114: first electrode terminal
120: second battery cell
122: second case
124: second electrode terminal

## Claims

1. A battery assembly (100, 500, 600, 700, 800, 900, 1000, 1100) comprising:
a first battery cell (110, 510, 610, 710, 810, 910, 1010, 1110) comprising:
a first electrode assembly (340) comprising a first electrode (342) and a second electrode (344);
a first case (112, 512, 612, 712, 812, 912, 1012, 1112) accommodating the first electrode assembly (340) therein, and electrically connected to the first electrode (342); and
a first electrode terminal (114, 514, 614, 714, 814, 914, 1014, 1114) exposed outside of the first case (112, 512, 612, 712, 812, 912, 1012, 1112), and electrically connected to the second electrode (344); and
a second battery cell (120, 520, 620, 720, 820, 920, 1020, 1120) comprising:
a second electrode assembly (340) comprising a third electrode (344) and a fourth electrode (342);
a second case (122, 522, 622, 722, 822, 922, 1022, 1122) accommodating the second electrode assembly (340) therein, and electrically connected to the third electrode (344); and
a second electrode terminal (124, 524, 624, 724, 824, 924, 1024, 1124) exposed outside of the second case (122, 522, 622, 722, 822, 922, 1022, 1122), and electrically connected to the fourth electrode (342),
wherein the first electrode (342) and the fourth electrode (342) have a same polarity as each other, the second electrode (344) and the third electrode (344) have a same polarity as each other, and the first case (112, 512, 612, 712, 812, 912, 1012, 1112) and the second case (122, 522, 622, 722, 822, 922, 1022, 1122) are coupled to each other in at least one contact region (130, 530, 630, 730, 830, 930, 1130).

2. The battery assembly (100, 500, 600, 700, 800, 900, 1000, 1100) as claimed in claim 1, wherein the first electrode and the fourth electrode are positive electrodes,
the second electrode and the third electrode are negative electrodes,
a material of the first case (112, 512, 612, 712, 812, 912, 1012, 1112) comprises aluminum or stainless steel, and
a material of the second case (122, 522, 622, 722, 822, 922, 1022, 1122) comprises stainless steel, nickel, copper, or a combination thereof.

3. The battery assembly (100, 500, 600, 700, 800, 900, 1000, 1100) as claimed in claim 1, wherein the first electrode and the fourth electrode are negative electrodes,
the second electrode and the third electrode are positive electrodes,
a material of the first case (112, 512, 612, 712, 812, 912, 1012, 1112) comprises stainless steel, nickel, copper, or a combination thereof, and
a material of the second case (122, 522, 622, 722, 822, 922, 1022, 1122) comprises aluminum or stainless steel.

4. The battery assembly (100, 500, 600, 700, 800, 900, 1000, 1100) as claimed in claim 1, wherein the first case (112, 512, 612, 712, 812, 912, 1012, 1112) and the second case (122, 522, 622, 722, 822, 922, 1022, 1122) are welded and coupled to each other in the contact region (130, 530, 630, 730, 830, 930, 1130).

5. The battery assembly (100, 500, 600, 700, 800, 900, 1000, 1100) as claimed in claim 1, wherein:
the first case (112, 512, 612, 712, 812, 912, 1012, 1112) comprises:
a first body (320) comprising a first reference surface (322), and first sidewalls (324, 424) extending from the first reference surface (322), the first body (320) having one open end, and accommodating the first electrode assembly (340) therein; and
a first cover (330) sealing the one open end of the first body (320);
the second case (122, 522, 622, 722, 822, 922, 1022, 1122) comprises:
a second body (320) comprising a second reference surface (322), and second sidewalls (324, 424) extending from the second reference surface (322), the second body (320) having one open end, and accommodating the second electrode assembly (340) therein; and
a second cover (330) sealing the one open end of the second body (320); and
at least one of the first sidewalls (324, 424) and at least one of the second sidewalls (324, 424) are coupled to each other.

6. The battery assembly (100, 500, 600, 700, 800, 900, 1000, 1100) as claimed in claim 5, wherein one long sidewall (324, 424) of the first sidewalls (324, 424) and one long sidewall (324, 424) of the second sidewalls (324, 424) are coupled to each other.

7. The battery assembly (100, 500, 600, 700, 800, 900, 1000, 1100) as claimed in claim 5, wherein one short sidewall (324, 424) of the first sidewalls (324, 424) and one short sidewall (324, 424) of the second sidewalls (324, 424) are coupled to each other.

8. The battery assembly (100, 500, 600, 700, 800, 900, 1000, 1100) as claimed in claim 5, wherein the first electrode terminal (114, 514, 614, 714, 814, 914, 1014, 1114) is exposed to the outside of the first case (112, 512, 612, 712, 812, 912, 1012, 1112) by penetrating through a short sidewall (324, 424) of the first sidewalls (324, 424), and
the second electrode terminal (124, 524, 624, 724, 824, 924, 1024, 1124) is exposed to the outside of the second case (122, 522, 622, 722, 822, 922, 1022, 1122) by penetrating through a short sidewall (324, 424) of the second sidewalls (324, 424).

9. The battery assembly (100, 500, 600, 700, 800, 900, 1000, 1100) as claimed in claim 5, wherein the first electrode terminal (114, 514, 614, 714, 814, 914, 1014, 1114) is exposed to the outside of the first case (112, 512, 612, 712, 812, 912, 1012, 1112) by penetrating through a long sidewall (324, 424) of the first sidewalls (324, 424), and
the second electrode terminal (124, 524, 624, 724, 824, 924, 1024, 1124) is exposed to the outside of the second case (122, 522, 622, 722, 822, 922, 1022, 1122) by penetrating through a long sidewall (324, 424) of the second sidewalls (324, 424).

10. The battery assembly (100, 500, 600, 700, 800, 900, 1000, 1100) as claimed in claim 5, wherein the first electrode terminal (114, 514, 614, 714, 814, 914, 1014, 1114) and the second electrode terminal (124, 524, 624, 724, 824, 924, 1024, 1124) are exposed to face a same direction as each other with respect to the battery assembly (100, 500, 600, 700, 800, 900, 1000, 1100).

11. The battery assembly (100, 500, 600, 700, 800, 900, 1000, 1100) as claimed in claim 5, wherein the first electrode terminal (114, 514, 614, 714, 814, 914, 1014, 1114) and the second electrode terminal (124, 524, 624, 724, 824, 924, 1024, 1124) are exposed to face different directions from each other with respect to the battery assembly (100, 500, 600, 700, 800, 900, 1000, 1100).

12. The battery assembly (100, 500, 600, 700, 800, 900, 1000, 1100) as claimed in claim 1, wherein:
the first case (112, 512, 612, 712, 812, 912, 1012, 1112) comprises:
a first body (320) comprising a first reference surface (322), and first sidewalls (324, 424) extending from the first reference surface (322), the first body (320) having one open end, and accommodating the first electrode assembly (340) therein; and
a first cover (330) sealing the one open end of the first body (320);
the second case (122, 522, 622, 722, 822, 922, 1022, 1122) comprises:
a second body (320) comprising a second reference surface (322), and second sidewalls (324, 424) extending from the second reference surface (322), the second body (320) having one open end, and accommodating the second electrode assembly (340) therein; and
a second cover (330) sealing the one open end of the second body (320); and
the first reference surface (322) or the first cover (330) is coupled to the second reference surface (322) or the second cover (330).

13. The battery assembly (100, 500, 600, 700, 800, 900, 1000, 1100) as claimed in claim 12, wherein the first electrode terminal (114, 514, 614, 714, 814, 914, 1014, 1114) is exposed to the outside of the first case (112, 512, 612, 712, 812, 912, 1012, 1112) from one of the first sidewalls (324, 424), and
the second electrode terminal (124, 524, 624, 724, 824, 924, 1024, 1124) is exposed to the outside of the second case (122, 522, 622, 722, 822, 922, 1022, 1122) from one of the second sidewalls (324, 424).

14. The battery assembly (100, 500, 600, 700, 800, 900, 1000, 1100) as claimed in claim 13, wherein the first electrode terminal (114, 514, 614, 714, 814, 914, 1014, 1114) is exposed to the outside of the first case (112, 512, 612, 712, 812, 912, 1012, 1112) by penetrating through a short sidewall (324, 424) of the first sidewalls (324, 424), and
the second electrode terminal (124, 524, 624, 724, 824, 924, 1024, 1124) is exposed to the outside of the second case (122, 522, 622, 722, 822, 922, 1022, 1122) by penetrating through a short sidewall (324, 424) of the second sidewalls (324, 424).

15. The battery assembly (100, 500, 600, 700, 800, 900, 1000, 1100) as claimed in claim 13, wherein the first electrode terminal (114, 514, 614, 714, 814, 914, 1014, 1114) is exposed to the outside of the first case (112, 512, 612, 712, 812, 912, 1012, 1112) by penetrating through a long sidewall (324, 424) of the first sidewalls (324, 424), and
the second electrode terminal (124, 524, 624, 724, 824, 924, 1024, 1124) is exposed to the outside of the second case (122, 522, 622, 722, 822, 922, 1022, 1122) by penetrating through a long sidewall (324, 424) of the second sidewalls (324, 424).
